# EUROPEAN PATENT APPLICATION

(11) **EP 4 277 012 A1**
(43) Date of publication of application: **15.11.2023**
(21) Application number: 21961890.7
(22) Date of filing: 29.10.2021
(51) Int. Cl.: H01M 50/636

(54) **BATTERY CELL, BATTERY, ELECTRICAL DEVICE, AND BATTERY CELL MANUFACTURING METHOD AND APPARATUS**

(71) Applicant: Contemporary Amperex Technology Co., Limited, Fujian PRC 352100 (CN)
(72) Inventor: PAN, Feng, Ningde, Fujian 352100 (CN); NI, Jun, Ningde, Fujian 352100 (CN); WEN, Yuqian, Ningde, Fujian 352100 (CN); ZHANG, Shengwu, Ningde, Fujian 352100 (CN); TANG, Minghao, Ningde, Fujian 352100 (CN); XIONG, Kanglin, Ningde, Fujian 352100 (CN)
(74) Representative: Ran, Handong
(86) International application number: PCT/CN2021/127470
(87) International publication number: WO 2023/070532

(57) **Abstract**

A battery cell, a battery, an electrical device, and a battery cell manufacturing method and apparatus. The battery cell (20) comprises: a first wall (21), a liquid injection hole (24) being provided in the first wall (21), an annular first groove (26) being provided around the liquid injection hole (24), the opening of the first groove (26) facing the outside of the battery cell (20); and a seal (25), the seal (25) comprising a bottom wall (252) and a side wall (251), the bottom wall (252) covering the end of the liquid injection hole (24) away from the inside of the battery cell (20), the side wall (251) being at least partially accommodated in the first groove (26), the side wall (251) being of an annular structure, and the side wall (251) of the seal (25) being frictionwelded to the bottom wall of the first groove (26) to seal the liquid injection hole (24). By providing in the first wall the first groove around the liquid injection hole, and friction-welding the seal in the first groove, welding defects are less likely to be formed, and sealing performance of the liquid injection hole in the battery cell is ensured.

## Description

### TECHNICAL FIELD

The present application relates to the field of battery technology, in particular to a battery cell, a battery, a power consumption apparatus, and a method and apparatus for producing a battery cell.

### BACKGROUND

Energy saving and emission reduction are the key to the sustainable development of automotive industry. Electric vehicles have become an important component of the sustainable development of the automotive industry due to advantages of energy saving and environmental protection. For the electric vehicles, battery technology is an important factor for their development.

In the process of producing a battery cell, a liquid injection hole of the battery cell is required to be sealed. If the liquid injection hole of the battery cell is poorly sealed, or defects are generated in the process of sealing, an electrolytic solution is likely to leak out, which results in battery failure, battery safety issues, and the like. Therefore, how to ensure sealing performance of a liquid injection hole in a battery cell is particularly important.

### SUMMARY

In view of the above problems, the present application provides a battery cell, a battery, a power consumption apparatus, and a method and apparatus for producing a battery cell, which could ensure sealing performance of a liquid injection hole in a battery cell.

In a first aspect, the present application provides a battery cell, including: a first wall, where a liquid injection hole is disposed on the first wall, a first groove in a circular ring shape is disposed around the liquid injection hole, and an opening of the first groove faces an exterior of the battery cell; and a sealing member, where the sealing member includes a bottom wall and a side wall, the bottom wall covers one end of the liquid injection hole away from an interior of the battery cell, the side wall is at least partially accommodated in the first groove, the side wall is in an annular structure, and the side wall of the sealing member is frictionally welded to a bottom wall of the first groove to seal the liquid injection hole.

By disposing the first groove surrounding the liquid injection hole on the first wall, the sealing member can be frictionally welded in the first groove to seal the liquid injection hole. The friction welding is friction between the sealing member and the first wall, and no stirring needle needs to be consumed, and particles generated by welding will not remain on a surface of a welding seam. In addition, friction welding has low requirements for the cleanliness of the liquid injection hole, and welding defects are not easy to be formed, which can achieve better welding effect and ensure sealing performance of the liquid injection hole in the battery cell.

In some embodiments, the sealing member is provided with a clamping part, and the clamping part is configured for a clamping apparatus to clamp and rotate the sealing member.

The clamping part is disposed on the sealing member, which can facilitate the clamping of the clamping apparatus, so as to facilitate the rotation of the sealing member in a friction welding process, thereby improving production efficiency.

In some embodiments, the clamping part protrudes from a surface of the bottom wall of the sealing member away from the interior of the battery cell.

The clamping part protrudes from the surface of the sealing member, which facilitates clamping of the clamping apparatus, and at the same time, does not require the clamping apparatus to contact the side wall of the sealing member, thereby preventing the clamping apparatus from damaging the side wall of the sealing member during the clamping and affecting the sealing performance of the sealing member for the liquid injection hole.

In some embodiments, the clamping part has two clamping surfaces parallel to each other, the two clamping surfaces are perpendicular to the bottom wall of the sealing member, and the clamping apparatus clamps the two clamping surfaces.

The clamping part is provided with two clamping surfaces parallel to each other and perpendicular to the bottom wall of the sealing member, so that the clamping apparatus can be clamped more securely, and the sealing member does not easily rotate relative to the clamping apparatus during rotation, thereby improving working efficiency.

In some embodiments, the clamping part is a cylinder, and the clamping apparatus clamps a cylindrical surface of the cylinder.

The clamping part is disposed in the shape of a cylinder, so that a large amount of operation space can be reserved for the clamping apparatus, which is beneficial to improving production efficiency.

In some embodiments, the sealing member is provided with a tool interface, and the tool interface is configured to accommodate a rotating head of a rotating apparatus to rotate the sealing member.

The tool interface is disposed on the sealing member, which can provide an accommodation space for the tool, and at the same time, the sealing member that is frictionally welded by using the tool interface cannot protrude from the surface of the battery cell. Therefore, no protrusion is left on a surface of the battery cell, so that the surface of the battery cell is relatively flat, the sealing member is prevented from coming loose or falling off due to collision during transportation or use, and the sealing performance of the liquid injection hole in the battery cell is ensured.

In some embodiments, one end of the side wall of the sealing member facing an opening of the sealing member is provided with a protruding part, the protruding part protrudes from the side wall of the sealing member in a radial direction of the liquid injection hole, and the protruding part is accommodated in the first groove.

The protruding part of the sealing member can increase the contact area between the sealing member and the first groove, and the formed portion for sealing connection can also have a larger area, thereby improving connection strength between the sealing member and the first groove, and ensuring the sealing performance of the liquid injection hole in the battery cell. Meanwhile, the protruding part is accommodated in the first groove, and is less likely to fall off due to collision or impact with another battery cell or another part in the battery during subsequent assembly of the battery cell into the battery. Furthermore, even if the protruding part falls off, the protruding part may fall into the first groove, which reduces a possibility of falling into the interior of the battery, thereby avoiding a problem such as a short circuit in the interior of the battery, and improving safety of the battery.

In some embodiments, the protruding part is welded to a side wall of the first groove.

The sealing connection between the protruding part and the side wall of the first groove can further increase the contact area between the sealing member and the first groove, thereby further improving connection strength between the sealing member and the first groove, and ensuring the sealing performance of the liquid injection hole in the battery cell.

In some embodiments, the bottom wall and a side wall of the first groove are connected by a rounded corner.

The rounded corner connection between the bottom wall and the side wall of the first groove can increase the contact area between the side wall of the sealing member and the first groove, which facilitates rapid generation of a large amount of heat by means of a larger area of friction in a friction welding process, so as to form a sealing structure. At the same time, the rounded corner enables the protruding part to contact the side wall of the first groove more easily during the forming process, thereby increasing the contact area between the protruding part and the groove, improving the connection strength between the sealing member and the first groove, and ensuring the sealing performance of the liquid injection hole in the battery cell.

In some embodiments, a maximum depth of the first groove is greater than or equal to a length of the sealing member in a thickness direction of the first wall, so that a surface of the sealing member away from the interior of the battery cell does not protrude from a surface of the first wall away from the interior of the battery cell.

The sealing member and the first groove are integrally set to sink below the surface of the first wall away from the interior of the battery cell, so that the sealing member does not protrude from the surface of the first wall of the battery cell. In this way, it is possible to avoid a problem that during transport of the battery cell, impact or collision of a protruding part on an outer surface of the sealing member causes the sealing member not to be tightly sealed or detached, so as to ensure the sealing performance of the liquid injection hole in the battery cell.

In some embodiments, the battery cell further includes a sealing gasket, and the sealing gasket is disposed between the bottom wall and the first wall to seal the liquid injection hole.

By disposing the sealing gasket between the bottom wall of the sealing member and the first wall, the liquid injection hole is further sealed by covering the opening of the liquid injection hole located on the side surface of the liquid injection hole away from the interior of the battery cell, in addition to sealing the liquid injection hole by the sealing structure formed between the sealing member and the first groove. As a result, the sealing effect of the liquid injection hole can be further improved.

In some embodiments, a surface of the first wall facing the sealing gasket is provided with multiple rings of recessed structures surrounding the liquid injection hole, a surface of the sealing gasket facing the liquid injection hole is provided with multiple rings of protruding structures, the multiple rings of recessed structures and the multiple rings of protruding structures are correspondingly disposed, and each ring of protruding structure in the multiple rings of protruding structures is accommodated in a corresponding recessed structure.

A portion surrounding the liquid injection hole is provided with the multiple rings of recessed structures for accommodating the multiple rings of protruding structures, so that after the protruding structures on the sealing gasket are in close contact with the recessed structures on the first wall, a contact area between the sealing gasket and the first wall can be increased, thereby making it difficult for the electrolytic solution to leak through the gap between the sealing gasket and the first wall, and improving the sealing performance of the liquid injection hole in the battery cell.

In some embodiments, a spacing between every two adjacent rings of protruding structures in the multiple rings of protruding structures is equal to a preset value, and a spacing between every two adjacent rings of recessed structures in the multiple rings of recessed structures is equal to the preset value.

The spacing between the multiple rings of protruding structures is equal to the spacing between the multiple rings of recessed structures, which can ensure that each protruding structure can be accommodated in one corresponding recessed structure, so that a close contact structure can be formed between the protruding structure and the recessed structure, thereby making it difficult for the electrolytic solution to leak through the gap between the sealing gasket and the first wall, so as to ensure the sealing performance of the liquid injection hole in the battery cell.

In some embodiments, the sealing gasket is bonded to the bottom wall of the sealing member through an adhesive layer.

When the sealing member rotates at a high speed, the adhesive layer can ensure that the position of the sealing gasket on the bottom wall of the sealing member is relatively fixed. In the process of pressing the sealing member downwards, the sealing gasket can accurately cover the opening of the liquid injection hole without being prone to misalignment and affecting the sealing performance of the liquid injection hole.

In some embodiments, a heat insulating layer is disposed between the sealing member and the sealing gasket.

The heat insulating layer is disposed between the sealing member and the sealing gasket, so that heat transfer between the sealing gasket and the sealing member can be prevented, sealing failure caused by heating of the sealing gasket is avoided, and thus the sealing performance of the liquid injection hole in the battery cell can be ensured.

In some embodiments, a distance between the first groove and the liquid injection hole is 0.5 to 10 mm, a depth of the first groove is 0.2 to 2 mm, and a width of the first groove is 0.5 to 5 mm.

If the distance between the first groove and the liquid injection hole is too small, an area between the first groove and the liquid injection hole is relatively weak, and deformation easily occurs to lead to liquid leakage, and correspondingly, the size of the sealing member is too small, which increases the difficulty of friction welding. If the distance is too large, the size of the bottom wall of the sealing member is caused to be set too large, so that the sealing member occupies too much space on the first wall, which affects the arrangement of other components of the battery cell on the first wall. If the depth of the first groove is too small, enough space cannot be reserved to accommodate a protruding part formed in the friction welding process, which affects the sealing strength of the sealing member, and easily causes the protruding part to fall into the interior of the battery and give rise to a short circuit. If the depth is too large, due to the limited thickness of the first wall, the distance between the bottom wall of the first groove and the surface of the first wall facing the interior of the battery cell may be caused to be too small, and the sealing member easily penetrates the first wall in the friction welding process, which causes welding defects. If the width of the first groove is too small, the side wall of the sealing member is correspondingly caused to be thinner, which affects the strength of the sealing member, and thus affects the sealing effect of the liquid injection port. If the width is too large, space on the first wall that is occupied by the first groove is too large, which affects the arrangement of other components of the battery cell on the first wall. The sizes of the sealing member and the first groove can be flexibly adjusted by setting relevant parameters of the first groove and the liquid injection hole, so as to adapt to requirements of batteries of different models.

In a second aspect, the present application provides a battery including the battery cell in the above embodiments, and a box configured to accommodate the battery cell.

In a third aspect, the present application provides a power consumption apparatus including the battery in the above embodiments, where the battery is configured to provide electric energy.

In a fourth aspect, the present application provides a method for producing a battery cell, including: providing a first wall, where a liquid injection hole is disposed on the first wall, a first groove in a circular ring shape is disposed around the liquid injection hole, and an opening of the first groove faces an exterior of the battery cell; providing a sealing member, where the sealing member includes a bottom wall and a side wall, the bottom wall covers one end of the liquid injection hole away from an interior of the battery cell, the side wall is at least partially accommodated in the first groove, and the side wall is in an annular structure; and rotating the sealing member along the first groove so that the side wall of the sealing member is frictionally welded to a bottom wall of the first groove to seal the liquid injection hole.

In a fifth aspect, the present application provides an apparatus for producing a battery cell, including: a providing module configured to provide a first wall, where a liquid injection hole is disposed on the first wall, a first groove in a circular ring shape is disposed around the liquid injection hole, and an opening of the first groove faces an exterior of the battery cell; the providing module further configured to provide a sealing member, where the sealing member includes a bottom wall and a side wall, the bottom wall covers one end of the liquid injection hole away from an interior of the battery cell, the side wall is at least partially accommodated in the first groove, and the side wall is in an annular structure; and an assembling module configured to rotate the sealing member along the first groove so that the side wall of the sealing member is frictionally welded to a bottom wall of the first groove to seal the liquid injection hole.

### BRIEF DESCRIPTION OF THE DRAWINGS

In order to illustrate technical solutions in embodiments of the present application more clearly, the following briefly introduces accompanying drawings required for describing the embodiments of the present application. Apparently, the following described accompanying drawings are merely some embodiments of the present application, and those of ordinary skill in the art may still derive other drawings from these accompanying drawings without creative efforts.
FIG. 1 is a schematic structural diagram of a vehicle provided by some embodiments of the present application;
FIG. 2 is a schematic diagram of an exploded structure of a battery provided by some embodiments of the present application;
FIG. 3 is a schematic structural diagram of a battery cell provided by some embodiments of the present application;
FIG. 4 is a partial cross-sectional view of a battery cell provided by some embodiments of the present application;
FIG. 5 is another partial cross-sectional view of a battery cell provided by some embodiments of the present application;
FIG. 6 is an enlarged view of region A in FIG. 5;
FIG. 7 is a schematic structural diagram of a sealing member provided by some embodiments of the present application;
FIG. 8 is a schematic structural diagram of another sealing member provided by some embodiments of the present application;
FIG. 9 is a schematic flowchart of a method for producing a battery cell provided by some embodiments of the present application; and
FIG. 10 is a schematic block diagram of an apparatus for producing a battery cell provided by some embodiments of the present application.

In the drawings, the drawings are not drawn to actual scale.

### DESCRIPTION OF EMBODIMENTS

Embodiments of technical solutions of the present application will be described in detail below in conjunction with the accompanying drawings. The following embodiments are only used to illustrate the technical solutions of the present application more clearly, and therefore are only examples, rather than limiting the protection scope of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the specification and the claims of the present application as well as the foregoing description of the accompanying drawings are intended to cover non-exclusive inclusions.

In the description of the embodiments of the present application, technical terms such as "first" and "second" are only used for distinguishing different objects, and should not be understood as indicating or implying relative importance or implicitly specifying the number, specific order or primary-secondary relationship of the indicated technical features. In the description of the embodiments of the present application, "a plurality of' means two or more, unless otherwise explicitly and specifically defined.

A phrase "embodiment" referred to herein means that a particular feature, structure, or characteristic described in combination with the embodiment can be included in at least one embodiment of the present application. The appearances of the phrase in various places in the specification are not necessarily all referring to the same embodiment, nor are separate or alternative embodiments mutually exclusive of other embodiments. Those skilled in the art understand, in explicit and implicit manners, that an embodiment described herein may be combined with other embodiments.

In the description of the embodiments of the present application, the term "and/or" is only a kind of association relationship describing associated objects, which means that there may be three kinds of relationships. For example, A and/or B may mean the following three cases: A exists alone, both A and B exist at the same time, and B exists alone. In addition, the character "/" herein generally indicates that the associated objects before and after the character are in an "or" relationship.

In the description of the embodiments of the present application, the term "a plurality of' refers to two or more (including two), similarly, the term "a plurality of groups" refers to two or more groups (including two groups), and "a plurality of pieces" refers to two or more pieces (including two pieces).

In the description of the embodiments of the present application, orientations or positional relationships indicated by technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", or the like are based on orientations or positional relationships shown in the drawings, and are only for the convenience of describing the embodiments of the present application and simplifying the description, and do not indicate or imply that a device or element referred to must have a specific orientation, be constructed and operated in a specific orientation, and therefore cannot be understood as limitations to the embodiments of the present application.

In the description of the embodiments of the present application, unless otherwise clearly specified and defined, technical terms such as "installation", "interconnection", "connection", and "fixation" should be interpreted in a broad sense, for example, it may be a fixed connection, or a detachable connection, or an integrated connection; it may also be a mechanical connection, or an electrical connection; or it may be a direct connection, or an indirect connection through an intermediary, and it may be internal communication between two elements or interaction relationship between two elements. Those of ordinary skill in the art can understand the specific meanings of the above terms in the embodiments of the present application according to specific situations.

At present, from the perspective of development of market situation, power batteries are increasing widely applied. Power batteries are not only used in energy storage power systems such as water power, firepower, wind power and solar power plants, but also widely used in electric vehicles such as electric bicycles, electric motorcycles and electric cars, as well as military equipment, aviation and aerospace, and other fields. With the continuous expansion of the application field of power batteries, their market demand is also constantly expanding.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which is not limited by the embodiments of the present application. The battery cell may be cylindrical, flat, cuboid or in another shape, which is not limited by the embodiments of the present application. The battery cell is generally divided into three types according to the way of packaging: a cylindrical battery cell, a square battery cell and a pouch battery cell, which is also not limited in the embodiments of the present application.

The battery mentioned in the embodiments of the present application refers to a single physical module that includes one or more battery cells to provide a higher voltage and capacity. For example, the battery mentioned in the present application may include a battery module, a battery pack, and the like. The battery generally includes a box for enclosing one or more battery cells. The box can prevent liquid or other foreign matters from affecting the charging or discharging of a battery cell.

The battery cell includes an electrode assembly and an electrolytic solution, and the electrode assembly is composed of a positive electrode sheet, a negative electrode sheet and a separator. The operation of the battery cell mainly relies on the movement of metal ions between the positive electrode sheet and the negative electrode sheet. The positive electrode sheet includes a positive electrode current collector and a positive electrode active material layer. The positive electrode active material layer is coated on a surface of the positive electrode current collector, and a positive electrode current collector not coated with the positive electrode active material layer protrudes from the positive electrode current collector coated with the positive electrode active material layer and is used as a positive tab. As an example, in a lithium-ion battery, the material of the positive electrode current collector may be aluminum, and the positive electrode active material may be lithium cobalt oxide, lithium iron phosphate, ternary lithium or lithium manganate, etc. The negative electrode sheet includes a negative electrode current collector and a negative electrode active material layer. The negative electrode active material layer is coated on a surface of the negative electrode current collector, and a negative electrode current collector not coated with the negative electrode active material layer protrudes from the negative electrode current collector coated with the negative electrode active material layer and is used as a negative tab. The material of the negative electrode current collector may be copper, and the negative electrode active material may be carbon or silicon, etc. In order to ensure that no fusing occurs when a large current passes, there are a plurality of positive tabs which are stacked together, and there are a plurality of negative tabs which are stacked together. A material of the separator may be polypropylene (PP), polyethylene (PE), or the like. In addition, the electrode assembly may be in a winding structure or a laminated structure, and the embodiments of the present application are not limited thereto.

In the current production process of battery cells, several widely applied sealing methods of a liquid injection hole of a battery are mainly as follows.

One method is laser welding sealing, which uses laser to weld a sealing nail at a liquid injection hole to achieve sealing of the liquid injection hole. This sealing process has extremely high requirements for the assembly and positioning of the sealing nail, as well as for the positioning of the liquid injection hole, and welding deviation is easy to be produced. At the same time, it has high requirements for the cleanliness of the liquid injection hole. When the cleanliness of the liquid injection hole does not meet requirements, welding hole defects can be easily formed, leading to liquid leakage.

Another method is to press steel balls or zirconium balls for interference compression sealing, which has low reliability and makes the steel balls easy to loosen.

Yet another method is frictional stir welding. A metal sheet is required to be placed at the place where an aluminum-cased battery is to be sealed. With a gap between an outer side wall of the metal sheet and an inner side wall of the aluminum-cased battery to be sealed as a welding seam, a rotatory stirring welding head is vertically pressed from the right above the welding seam to move the stirring welding head along the welding seam, and the metal sheet and an aluminum-cased battery housing are welded together. After moving along the welding seam for one circle, the stirring welding head returns to the starting position. The stirring welding head slows down, the stirring welding head is lifted, a stirring needle is extracted from a welding area, a keyhole is left on the surface of the extraction position, so as to complete the sealing of the aluminum-cased battery. This sealing process is prone to generating a large amount of particles remaining on the surface of the welding seam, and requires secondary milling or polishing treatment. The stirring needle will also leave pits on the surface of the welding seam, which affects sealing strength. Meanwhile, during actual production, the stirring needle is prone to wear and tear, making it difficult to maintain. If the stirring needle is worn and torn, it will affect welding quality and be detrimental to the production of a battery cell.

In order to solve the problems in the above sealing processes, the present application provides a battery cell, where a groove in a circular ring shape is disposed around a liquid injection hole of the battery cell to surround the liquid injection hole, and an annular side wall of a sealing member matching the groove is at least partially accommodated in the groove, and is frictionally welded to a bottom wall of the groove to seal the liquid injection hole. The liquid injection hole is sealed through the friction between the side wall of the sealing member and the bottom wall of the first groove, which does not need to consume a stirring needle, and will also not produce residual particles generated by welding on a welding surface. At the same time, friction welding has low requirements for the cleanliness of the liquid injection hole, and welding defects are not easy to be formed, which can achieve better welding effect and ensure sealing performance of the liquid injection hole in the battery cell.

Embodiments of the present application provide a power consumption apparatus using a battery as a power supply, and the power consumption apparatus may be but not limited to a mobile phone, a tablet, a notebook computer, an electric toy, an electric tool, an electromobile, an electric vehicle, a ship, a spacecraft, or the like. The electric toy may include a fixed or mobile electric toy, such as a game console, an electric vehicle toy, an electric ship toy and an electric airplane toy; and the spacecraft may include an airplane, a rocket, a space shuttle, a spaceship, and the like.

For convenience of description of the following embodiments, description is made by an example that a power consumption apparatus is a vehicle 1000 in an embodiment of the present application.

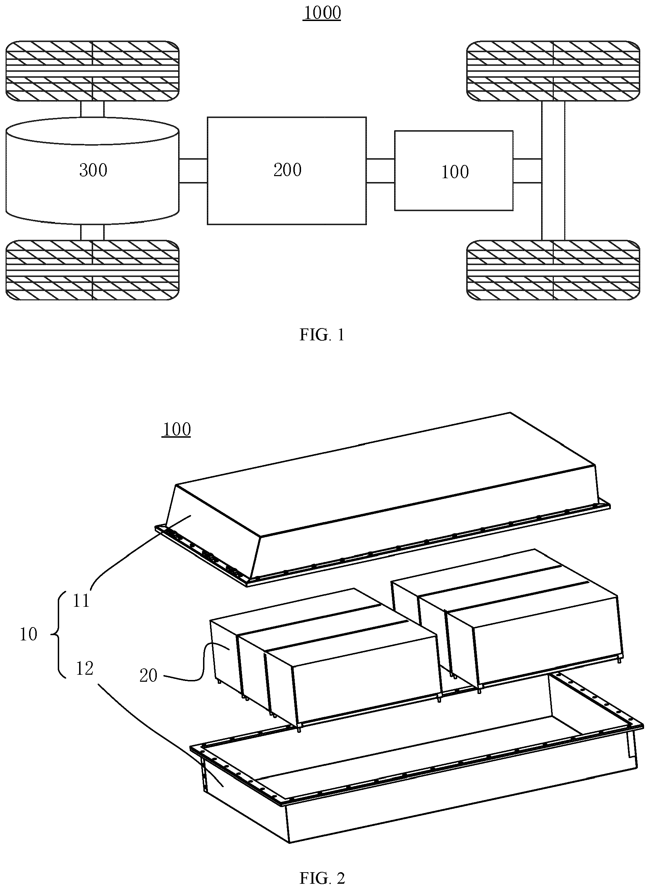

Please refer to FIG. 1, FIG. 1 is a schematic structural diagram of a vehicle 1000 provided by some embodiments of the present application. The vehicle 1000 may be a fuelpowered vehicle, a gas-powered vehicle or a new energy vehicle, and the new energy vehicle may be a battery electric vehicle, a hybrid vehicle, an extended-range vehicle, or the like. A battery 100 may be disposed inside the vehicle 1000, and the battery 100 may be disposed at the bottom, head or tail of the vehicle 1000. The battery 100 may be used for supplying power to the vehicle 1000. For example, the battery 100 may serve as an operation power supply of the vehicle 1000. The vehicle 1000 may also include a controller 200 and a motor 300. The controller 200 is configured to control the battery 100 to supply power to the motor 300, for example, for a working power demand of the vehicle 1000 during startup, navigation, and running.

In some embodiments of the present application, the battery 100 can not only serve as an operation power supply of the vehicle 1000, but also as a driving power supply of the vehicle 1000, replacing or partially replacing fuel or natural gas to provide driving power for the vehicle 1000.

Please refer to FIG. 2, FIG. 2 is an exploded view of a battery 100 provided by some embodiments of the present application. The battery 100 includes a box 10 and a battery cell 20, and the battery cell 20 is accommodated in the box 11. The box 10 is configured to provide accommodation space for the battery cell 20, and the box 10 may adopt a variety of structures. In some embodiments, the box 10 may include a first portion 11 and a second portion 12, the first portion 11 and the second portion 12 cover each other, and the first portion 11 and the second portion 12 jointly define the accommodation space for accommodating the battery cell 20. The second portion 12 may be a hollow structure with one end open, the first portion 11 may be a platelike structure, and the first portion 11 covers an opening side of the second portion 12, so that the first portion 11 and the second portion 12 jointly define the accommodation space; alternatively, both the first portion 11 and the second portion 12 may be a hollow structure with one side open, and an opening side of the first portion 11 covers an opening side of the second portion 12. It is appreciated that, the box 10 formed by the first portion 11 and the second portion 12 may be in various shapes, such as a cylinder, a cuboid, and the like.

In the battery 100, a plurality of battery cells 20 may be provided. The plurality of battery cells 20 may be in series connection, parallel connection or series-parallel connection, and the series-parallel connection means that the plurality of battery cells 20 are connected in series and parallel. The plurality of battery cells 20 may be in direct series connection, parallel connection or series-parallel connection, and then the whole composed of the plurality of battery cells 20 is accommodated in the box 10. It is appreciated that, for the battery 100, the plurality of battery cells 20 may also be firstly connected in series, in parallel or in series-parallel to form a battery module, and then a plurality of battery modules are connected in series or in parallel or in series-parallel to form a whole, and then accommodated in the box 10. The battery 100 may also include another structure, for example, the battery 100 may also include a bus component configured to implement electrical connection between the plurality of battery cells 20.

Each battery cell 20 may be a secondary battery or a primary battery, or may also be a lithium-sulfur battery, a sodium-ion battery or a magnesium-ion battery, but is not limited thereto. The battery cell 20 may be cylindrical, flat, cuboid or in another shape, which is not limited by the embodiments of the present application.

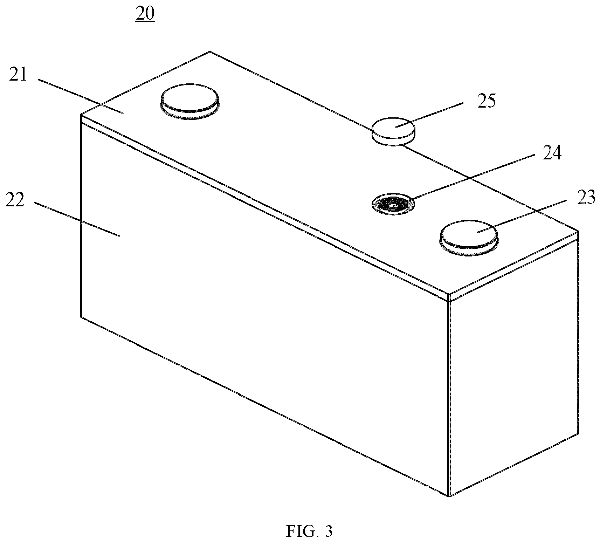

Please refer to FIG. 3, FIG. 3 is a schematic structural diagram of a battery cell 20 provided by some embodiments of the present application. The battery cell 20 is the smallest unit for constituting a battery. As shown in FIG. 3, the battery cell 20 includes a first wall, a housing 22, an electrode terminal 23, a liquid injection hole 24, a sealing member 25 and other functional parts.

The first wall 21 is a wall on the battery cell 20 that is provided with the liquid injection hole 24, for example, it may be an end cover on the battery cell 20 for covering an opening of the housing 22 to isolate internal environment of the battery cell 20 from external environment. Without limitation, the shape of the first wall 21 may be adapted to the shape of the housing 22 to fit the housing 22. Optionally, the first wall 21 may be made of a material (such as aluminum alloy) with a certain hardness and strength, so that the first wall 21 is not subjected to deformation easily when squeezed and collided, and thus the battery cell 20 can have a higher structural strength and safety performance can also be improved to some extent. A functional part such as an electrode terminal 23 may be disposed on the first wall 21. The electrode terminal 23 may be configured to be electrically connected with an electrode assembly for outputting or inputting electric energy of the battery cell 20. In some embodiments, a pressure relief mechanism may be further disposed on the first wall 21, and the pressure relief mechanism is configured to relieve an internal pressure when the internal pressure or temperature of the battery cell 20 reaches a threshold. The first wall 21 may also be made of various materials, for example, copper, iron, aluminum, stainless steel, aluminum alloy, plastic, or the like, which is not particularly limited in the embodiment of the present application. In some embodiments, an insulating member may be further disposed on an inner side of the first wall 21, and the insulating member may be configured to isolate an electrical connection part in the housing 22 from the first wall 21 to reduce the risk of short circuit. By way of an example, the insulating member may be made of plastic, rubber or the like.

The housing 22 is a component configured to cooperate with the first wall 21 to form the internal environment of the battery cell 20, where the formed internal environment may be used to accommodate the electrode assembly, an electrolytic solution and other parts. The housing 22 and the first wall 21 may be independent parts, an opening may be disposed on the housing 22, and the first wall 21 covers the opening at the opening to form the internal environment of the battery cell 20. Without limitation, the first wall 21 and the housing 22 may also be integrally disposed. Specifically, the first wall 21 and the housing 22 may form a common connecting face first before other parts are placed into the housing, and when an interior of the housing 22 needs to be packaged, the first wall 21 then covers the housing 22. The housing 22 may be in various shapes and sizes, such as a cuboid, a cylinder, and a hexagonal prism. Specifically, the shape of the housing 22 may be determined according to the specific shape and size of the electrode assembly. The housing 22 may be made of various materials, for example, copper, iron, aluminum, stainless steel, aluminum alloy, and plastic, which is not particularly limited in the embodiments of the present application.

The electrode terminal 23 is configured to be electrically connected with the electrode assembly for outputting the electric energy of the battery cell 20. The electrode terminal 23 may include a positive electrode terminal and a negative electrode terminal, the positive electrode terminal is configured to be electrically connected with a positive tab, and the negative electrode terminal is configured to be electrically connected with a negative tab. The positive electrode terminal may be directly or indirectly connected with the positive tab, and the negative electrode terminal may be directly or indirectly connected with the negative tab. By way of an example, the positive electrode terminal is electrically connected with the positive tab through a connecting member, and the negative electrode terminal is electrically connected with the negative tab through a connecting member.

The electrolytic solution may be injected into the interior of the battery cell 20 through the liquid injection hole 24 so that the interior of the battery cell 20 can form an ion channel to ensure that sufficient lithium ions can migrate between positive and negative electrode sheets during charging and discharging of a battery and thus a reversible cycle is realized.

The sealing member 25 is configured to seal the liquid injection hole 24, which can prevent leakage of the electrolytic solution through the liquid injection hole 24 from affecting conduction of the electrode terminal 23 so as to ensure normal use of a battery 100.

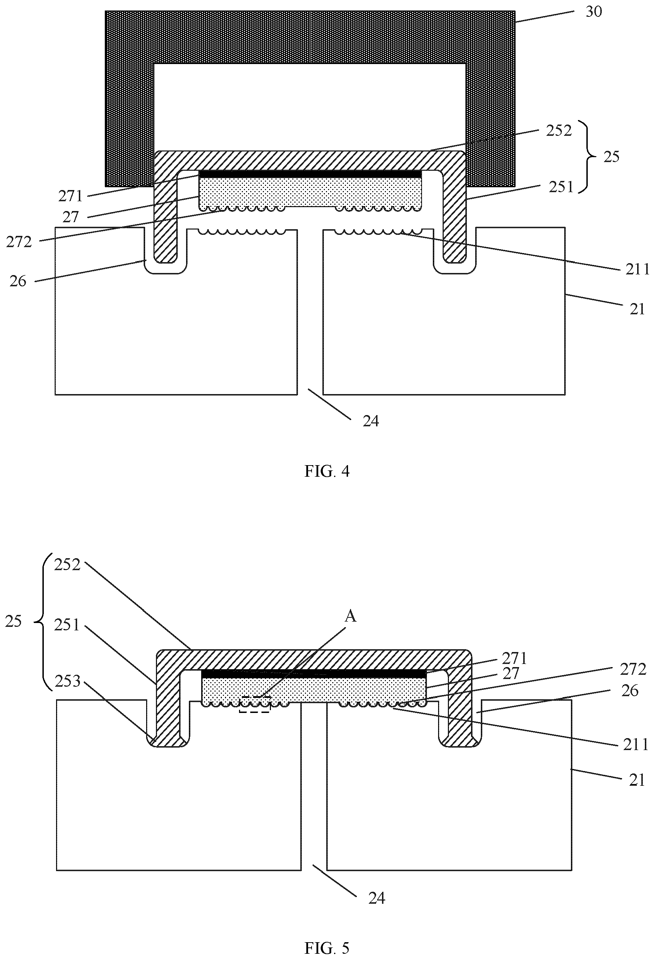

Below, the battery cell 20 provided by embodiments of the present application is described in detail with reference to FIGS. 4 to 7.

FIG. 4 is a partial cross-sectional view of a battery cell 20 provided by some embodiments of the present application, and can be regarded as a partial cross-sectional view of the battery cell 20 before sealing and welding. FIG. 5 is another partial cross-sectional view of a battery cell 20 provided by some embodiments of the present application, and can be regarded as a partial cross-sectional view of the battery cell 20 after sealing and welding. As shown in FIG. 4 and FIG. 5, the battery cell 20 includes a first wall 21 and a sealing member 25. A liquid injection hole 24 is disposed on the first wall 21, a first groove 26 in a circular ring shape is disposed around the liquid injection hole 24, and an opening of the first groove 26 faces an exterior of the battery cell 20. A sealing member 25 includes a bottom wall 252 and a side wall 251, the bottom wall 252 covers one end of the liquid injection hole 24 away from an interior of the battery cell 20, the side wall 251 is at least partially accommodated in the first groove 26, the side wall 251 is in an annular structure, and the side wall 251 of the sealing member 25 is frictionally welded to a bottom wall of the first groove 26 to seal the liquid injection hole 24.

The first wall 21 is a wall on the battery cell 20 that is provided with the liquid injection hole 24, for example, it may be a top wall of the battery cell 20. The liquid injection hole 24 on the first wall 21 penetrates the first wall 21 in a thickness direction of the first wall 21, and an electrolytic solution may be injected into the interior of the battery cell 20 through the liquid injection hole 24 so that the interior of the battery cell 20 can form an ion channel to ensure that ions can migrate between positive and negative electrode sheets during charging and discharging of a battery 100.

The first groove 26 is a groove on the first wall 21 that surrounds the liquid injection hole 24, and its cross-section in a direction perpendicular to the thickness of the first wall 21 is a circular ring. In a possible embodiment, a center of the circular ring-shaped first groove 26 may coincide with a center of an opening of the liquid injection hole 24 at the end away from the interior of the battery cell 20. In this way, an edge of the liquid injection hole 24 and an edge of the first groove 26 adjacent to the liquid injection hole 24 are spaced evenly, and a local weak situation does not exist easily, which can ensure sealing strength of the sealing member 25 for the liquid injection port 24.

The side wall 251 of the sealing member 25 is in an annular structure and at least partially accommodated in the first groove 26; and the bottom wall 252 of the sealing member 25 is circular. In order to enable the side wall 251 of the sealing member 25 to be accommodated in the first groove 26, a diameter of the circular sealing member 25 is not greater than an outer diameter of the circular ring-shaped groove, and a thickness of the side wall 251 of the sealing member 25 is also not greater than a width of the first groove 26. The first groove 26 can provide positioning for the sealing member 25, so as to ensure that the sealing member 25 is always maintained around the liquid injection hole 24 when friction welding is performed, and thus welding deviation can be effectively avoided. In a state in which the sealing member 25 seals the liquid injection hole 24, the bottom wall 252 of the sealing member 25 can cover one end of the liquid injection hole 24 away from the interior of the battery cell 20, so that in a case in which a sealing structure is formed between the side wall 251 of the sealing member 25 and the bottom wall of the first groove 26, the bottom wall 252 of the sealing member 25 can prevent the electrolytic solution from leaking out, so as to seal the liquid injection hole 24.

The side wall 251 of the sealing member 25 may be partially or completely accommodated in the first groove 26. The portion of the side wall 251 of the sealing member 25 that is accommodated in the first groove 26 may be in contact with only the bottom wall of the first groove 26, or may be in contact with both the bottom wall 252 and the side wall 251 of the first groove 26, so as to increase the area for friction welding.

The friction welding between the side wall 251 of the sealing member 25 and the bottom wall of the first groove 26 means that one end of the side wall 251 of the sealing member 25 facing the opening of the sealing member 25 is in contact with the bottom wall of the first groove 26, and a sealing structure capable of sealing is formed therebetween by means of friction welding.

When the liquid injection hole 24 is frictionally welded by using the sealing member 25, a clamping apparatus 30 can clamp the sealing member 25 and rotate at a first speed. The clamping apparatus 30 and the sealing member 25 are fixed relative to each other, and rotate together at a first speed. When the clamping apparatus 30 rotates together with the sealing member 25, the sealing member 25 is placed in the first groove 26 at a preset position, so that the sealing member 25 can rotate along the first groove 26. The preset position refers to a position on the first wall 21 where the first groove 26 is disposed, and a part of the side wall 251 of the sealing member 25 is accommodated in the first groove 26 and can rotate along an axial direction of the first groove 26 passing through a circle center. Before the sealing member 25 contacts the bottom wall of the first groove 26, the clamping apparatus 30 may accelerate the sealing member 25 to a second speed and contact the bottom wall of the first groove 26 at the second speed. Under the action of frictional resistance, the sealing member 25 may decelerate to a third speed after contacting the bottom wall of the first groove 26, and the side wall 251 of the sealing member 25 and the bottom wall of the first groove 26 are subjected to rotational friction at the third speed. The side wall 251 of the sealing member 25 and the bottom wall of the first groove 26 generate heat due to friction, so that a friction surface of the two are softened. After a first time period of rotational friction, the clamping apparatus 30 can apply heading pressure to the sealing member 25, and the sealing member 25 can be pressed downwards by a certain distance under the action of the heading pressure, so that the side wall 251 of the sealing member 25 is in further close contact with the bottom wall of the first groove 26. After the rotation is stopped, the side wall 251 of the sealing member 25 and the bottom wall of the first groove 26 are gradually cooled, and a close contact portion between the two forms a sealing structure to seal the liquid injection hole 24.

By disposing the first groove 26 surrounding the liquid injection hole 24 on the first wall 21, the sealing member 25 can be frictionally welded in the first groove 26 to seal the liquid injection hole 24. The friction welding is friction between the sealing member 25 and the first wall 21, and no stirring needle needs to be consumed, and particles generated by welding will not remain on a surface of a welding seam. In addition, friction welding has low requirements for the cleanliness of the liquid injection hole 24, and welding defects are not easy to be formed, which can achieve better welding effect and ensure sealing performance of the liquid injection hole 24 in the battery cell 20.

According to some embodiments of the present application, optionally, a maximum depth of the first groove 26 is greater than or equal to a length of the sealing member 25 in a thickness direction of the first wall 21, so that a surface of the sealing member 25 away from the interior of the battery cell 20 does not protrude from a surface of the first wall 21 away from the interior of the battery cell 20.

The first groove 26 has a certain depth in a direction perpendicular to the first wall 21. Since the first groove 26 is a circular ring, the first groove 26 may have two depths in the direction perpendicular to the first wall 21, that is, the first groove 26 has a first depth at a position where an outer circle of the circular ring is located; and the first groove 26 has a second depth at a position where an inner circle of the circular ring is located. In order to prevent an upper surface of the sealing member 25 from protruding from an upper surface of the first wall 21 in the welded battery cell 20, the first depth needs to be at least greater than the second depth. Considering that the bottom wall 252 of the sealing member 25 has a certain thickness, the first depth also needs to be greater than or equal to the thickness of the sealing member 25. The upper surface of the sealing member 25 refers to a surface away from the interior of the battery cell 20, the upper surface of the first wall 21 refers to a surface of the first wall 21 away from the interior of the battery cell 20, and the thickness of the sealing member 25 refers to a length of the sealing member 25 in a direction perpendicular to the thickness of the first wall 21.

The sealing member 25 and the first groove 26 are integrally set to sink below the surface of the first wall 21 away from the interior of the battery cell 20, so that the sealing member 25 does not protrude from the surface of the first wall 21 of the battery cell 20. In this way, it is possible to avoid a problem that during transport of the battery cell 20, impact or collision of a protruding part on an outer surface causes the sealing member 25 not to be tightly sealed or detached, so as to ensure the sealing performance of the liquid injection hole 24 in the battery cell 20.

According to some embodiments of the present application, optionally, a distance between the first groove 26 and the liquid injection hole 24 is 0.5 to 10 mm, a depth of the first groove 26 is 0.2 to 2 mm, and a width of the first groove 26 is 0.5 to 5 mm.

The distance between the first groove 26 and the liquid injection hole 24 refers to a distance between an edge of the first groove 26 adjacent to the liquid injection hole 24 and an edge of the liquid injection hole 24. If the distance between the first groove 26 and the liquid injection hole 24 is too small, an area between the first groove 26 and the liquid injection hole 24 is relatively weak, and deformation easily occurs to lead to liquid leakage, and correspondingly, the size of the sealing member 25 is too small, which increases the difficulty of friction welding. If the distance is too large, the size of the bottom wall 252 of the sealing member 25 is caused to be set too large, so that the sealing member 25 occupies too much space on the first wall 21, which affects the arrangement of other components of the battery cell 20 on the first wall 21.

The depth of the first groove 26 refers to the maximum depth of the first groove 26, that is, a distance between an edge of the first groove 26 away from the liquid injection hole 24 and a plane where the bottom wall of the first groove 26 is located. If the depth of the first groove 26 is too small, enough space cannot be reserved to accommodate a protruding part 253 formed in the friction welding process, which affects the sealing strength of the sealing member 25, and easily causes the protruding part 253 to fall into the interior of the battery 100 and give rise to a short circuit. If the depth is too large, due to the limited thickness of the first wall 21, the distance between the bottom wall of the first groove 26 and the surface of the first wall 21 facing the interior of the battery cell 20 may be caused to be too small, and the sealing member 25 easily penetrates the first wall 21 in the friction welding process, which causes welding defects.

The width of the first groove 26 refers to a distance between an inner edge and an outer edge of the first groove 26 in a radial direction of the first groove 26. If the width of the first groove 26 is too small, the side wall of the sealing member 25 is correspondingly caused to be thinner, which affects the strength of the sealing member 25, and thus affects the sealing effect of the liquid injection port 24. If the width is too large, space on the first wall 21 that is occupied by the first groove 26 is too large, which affects the arrangement of other components of the battery cell 20 on the first wall 21.

The sizes of the sealing member 25 and the first groove 26 can be flexibly adjusted by setting relevant parameters of the first groove 26 and the liquid injection hole 24, so as to adapt to requirements of batteries 100 of different models.

According to some embodiments of the present application, optionally, one end of the side wall 251 of the sealing member 25 facing an opening of the sealing member 25 is provided with a protruding part 253, the protruding part 253 protrudes from the side wall 251 of the sealing member 25 in a radial direction of the liquid injection hole 24, and the protruding part 253 is accommodated in the first groove 26.

As shown in FIGS. 4 and 5, in the friction welding process, specifically, one end of the side wall 251 of the sealing member 25 facing the opening of the sealing member 25 is rubbed against the bottom wall of the first groove 26, and a portion of the side wall 251 of the sealing member 25 that is rubbed against the bottom wall of the first groove 26 is gradually softened with the heat generated by the friction. After receiving the heading pressure applied by the clamping apparatus 30, the softened portion is deformed by force, and is squeezed into a protruding part 253 protruding from the side wall 251 of the sealing member 25 in a radial direction of the liquid injection hole 24. The radial direction of the liquid injection hole 24 may be a direction towards the center of the liquid injection hole 24, or a direction away from the center of the liquid injection hole 24. As can be seen from FIGS. 4 and 5, the protruding part 253 is formed both in a direction of the side wall 251 of the sealing member 25 towards the liquid injection hole 24 and in a direction of the side wall 251 of the sealing member 25 away from the liquid injection hole 24, and the protruding part 253 is accommodated in the first groove 26.

The protruding part 253 of the sealing member 25 can increase the contact area between the sealing member 25 and the first groove 26, and the formed portion for sealing connection can also have a larger area, thereby improving connection strength between the sealing member 25 and the first groove 26, and ensuring the sealing performance of the liquid injection hole 24 in the battery cell 20. Meanwhile, the protruding part 253 is accommodated in the first groove 26, and is less likely to fall off due to collision or impact with another battery cell 20 or another part in the battery 100 during subsequent assembly of the battery cell 20 into the battery 100. Furthermore, even if the protruding part 253 falls off, the protruding part 253 may fall into the first groove 26, which reduces a possibility of falling into the interior of the battery 100, thereby avoiding a problem such as a short circuit in the interior of the battery 100, and improving safety of the battery 100.

According to some embodiments of the present application, optionally, the protruding part 253 is welded to a side wall of the first groove 26.

The welding of the protruding part 253 to the side wall of the first groove 26 means that the protruding part 253 and the side wall of the first groove 26 form a structure of sealing connection by means of friction welding. When heading pressure applied by the clamping apparatus 30 is relatively high or time for which the heading pressure is applied is relatively long, many protruding parts 253 may be formed. In this case, the protruding part 253 can be connected not only to the bottom wall of the first groove 26 in a sealing manner, but also to the side wall of the first groove 26 in a sealing manner.

The sealing connection between the protruding part 253 and the side wall of the first groove 26 can further increase the contact area between the sealing member 25 and the first groove 26, thereby further improving connection strength between the sealing member 25 and the first groove 26, and ensuring the sealing performance of the liquid injection hole 24 in the battery cell 20.

According to some embodiments of the present application, optionally, the bottom wall and a side wall of the first groove 26 are connected by a rounded corner.

A rounded corner can be configured between the bottom wall and the side wall of the first groove 26, and a radius of the rounded corner can be set flexibly.

The rounded corner connection between the bottom wall and the side wall of the first groove 26 can increase the contact area between the side wall 251 of the sealing member 25 and the first groove 26, which facilitates rapid generation of a large amount of heat by means of a larger area of friction in a friction welding process, so as to form a sealing structure. At the same time, the rounded corner enables the protruding part 253 to contact the side wall of the first groove 26 more easily during the forming process, thereby increasing the contact area between the protruding part 253 and the groove, improving the connection strength between the sealing member 25 and the first groove 26, and ensuring the sealing performance of the liquid injection hole 24 in the battery cell 20.

According to some embodiments of the present application, optionally, the battery cell 20 further includes a sealing gasket 27, and the sealing gasket 27 is disposed between the bottom wall 252 and the first wall 21 to seal the liquid injection hole 24.

As can be seen from FIG. 5, after the side wall 251 of the sealing member 25 is frictionally welded to the bottom wall of the first groove 26, a certain gap still exists between a side surface of the bottom wall 252 of the sealing member 25 facing the interior of the battery cell 20 and a side surface of the first wall 21 away from the interior of the battery cell 20, and the liquid injection hole 24 can only be sealed by using a sealing structure formed between the side wall 251 of the sealing member 25 and the first groove 26. In the embodiment shown in FIG. 5, a sealing gasket 27 is disposed between the bottom wall 252 of the sealing member 25 and the first wall 21 to fill the gap between the side surface of the bottom wall 252 of the sealing member 25 facing the interior of the battery cell 20 and the side surface of the first wall 21 away from the interior of the battery cell 20, so that the liquid injection hole 24 can be sealed directly at an opening of the liquid injection hole 24 located on the side surface of the first wall 21 away from the interior of the battery cell 20, thereby achieving a better sealing effect.

The sealing gasket 27 may be made of an elastic material, for example, a rubber-like material, specifically, fluororubber for example. In the process of frictionally welding the side wall 251 of the sealing member 25 and the bottom wall of the first groove 26, the clamping apparatus 30 applies heading pressure to the sealing member 25 and then presses downwards a certain distance, so that the opening of the liquid injection hole 24 located on the side surface of the first wall 21 away from the interior of the battery cell 20 squeezes the sealing gasket 27 so that the sealing gasket 27 deforms, thereby further improving the sealing effect of the liquid injection hole 24.

The sealing gasket 27 is disposed on a surface of the bottom wall 252 of the sealing member 25 facing the interior of the battery cell 20. In the direction perpendicular to the thickness of the first wall 21, the sealing gasket 27 and the sealing member 25 may have the same cross-sectional shape, for example, both are circular; alternatively, the sealing gasket 27 and the sealing member 25 may have different cross-sectional shapes, for example, the sealing member 25 has a circular cross-sectional shape, and the sealing gasket 27 has a rectangular cross-sectional shape. It should be noted that, in the direction perpendicular to the thickness of the first wall 21, a cross-sectional area of the sealing gasket 27 is at least greater than a cross-sectional area of the liquid injection hole 24, and is located at a position where the liquid injection hole 24 can be completely covered.

By disposing the sealing gasket 27 between the bottom wall 252 of the sealing member 25 and the first wall 21, the liquid injection hole 24 is further sealed by covering the opening of the liquid injection hole 24 located on the side surface of the liquid injection hole 24 away from the interior of the battery cell 20, in addition to sealing the liquid injection hole 24 by the sealing structure formed between the sealing member 25 and the first groove 26. As a result, the sealing effect of the liquid injection hole 24 can be further improved.

According to some embodiments of the present application, optionally, the sealing gasket 27 is bonded to the bottom wall 252 of the sealing member 25 through an adhesive layer 271.

The adhesive layer 271 may be disposed between the sealing gasket 27 and the bottom wall 252 of the sealing member 25, and the sealing gasket 27 is bonded to the side surface of the bottom wall 252 of the sealing member 25 facing the interior of the battery cell 20. In the direction perpendicular to the thickness of the first wall 21, the adhesive layer 271 and the sealing gasket 27 may have the same cross-sectional shape or different cross-sectional shapes. In the direction perpendicular to the thickness of the first wall 21, the adhesive layer 271 and the sealing gasket 27 may have the same cross-sectional area, or a cross-sectional area of the adhesive layer 271 may be slightly smaller than that of the sealing gasket 27. Meanwhile, the adhesive layer 271 may have a certain thickness.

When the sealing member 25 rotates at a high speed, the adhesive layer 271 can ensure that the position of the sealing gasket 27 on the bottom wall 252 of the sealing member 25 is relatively fixed. In the process of pressing the sealing member 25 downwards, the sealing gasket 27 can accurately cover the opening of the liquid injection hole 24 without being prone to misalignment and affecting the sealing performance of the liquid injection hole 24.

According to some embodiments of the present application, optionally, a heat insulating layer is disposed between the sealing member 25 and the sealing gasket 27.

In the embodiment of the present application, when the side wall 251 of the sealing member 25 is frictionally welded to the first groove 26, a large amount of heat may be generated by high-speed rotation, so as to soften a portion where the side wall 251 of the sealing member 25 is rubbed against the first groove 26. At the same time, heat is also transferred to a portion of the sealing member 25 that is not in contact with the first groove 26, for example the bottom wall 252 of the sealing member 25. The bottom wall 252 of the sealing member 25 may further transfer heat to the sealing gasket 27, which results in that the sealing gasket 27 is heated to be deformed or aged, thereby affecting the sealing effect of the sealing gasket 27. Therefore, a heat insulating layer may be disposed between the sealing gasket 27 and the sealing member 25, which can prevent heat transfer between the sealing member 25 and the sealing gasket 27. In a possible implementation, the sealing gasket 27 may be bonded to the bottom wall of the sealing member 25 by an adhesive made of a heat insulating material, that is, the adhesive layer 271 is the heat insulating layer. In this way, only one layer of structure needs to be disposed, which can not only serve to fix the sealing gasket, but also serve to insulate heat.

The heat insulating layer is disposed between the sealing member 25 and the sealing gasket 27, so that heat transfer between the sealing gasket 27 and the sealing member 25 can be prevented, sealing failure caused by heating of the sealing gasket 27 is avoided, and thus the sealing performance of the liquid injection hole 24 in the battery cell 20 can be ensured.

According to some embodiments of the present application, optionally, a surface of the first wall 21 facing the sealing gasket 27 is provided with multiple rings of recessed structures 211 surrounding the liquid injection hole 24, a surface of the sealing gasket 27 facing the liquid injection hole 24 is provided with multiple rings of protruding structures 272, the multiple rings of recessed structures 211 and the multiple rings of protruding structures 272 are correspondingly disposed, and each ring of protruding structure 272 in the multiple rings of protruding structures 272 is accommodated in a corresponding recessed structure 211.

A region A in FIG. 5 is a portion of the recessed structures 211 disposed on the surface of the first wall 21 and the protruding structures 272 disposed on the surface of the sealing gasket 27. As can be seen from FIG. 5, the recessed structures 211 are disposed around the liquid injection hole 24, i.e., surrounding the liquid injection hole 24, so that the protruding structures 272 on the sealing gasket 27 can serve a role of sealing the liquid injection hole 24 after being accommodated in the recessed structures 211. Since the protruding structures 272 and the recessed structures 211 are correspondingly disposed, each ring of recessed structure 211 has one correspondingly disposed ring of protruding structure 272 disposed on the sealing gasket 27. The protruding structure 272 on the sealing gasket 27 is accommodated in the recessed structure 211 on the first wall 21 that is correspondingly disposed thereto, that is, a surface of the protruding structure 272 on the sealing gasket 27 is in close contact with a surface of the recessed structure 211 on the first wall 21, so as to increase a contact area between the entire sealing gasket 27 and the first wall 21, thereby making it difficult for the electrolytic solution to leak through a gap between the sealing gasket 27 and the first wall 21.

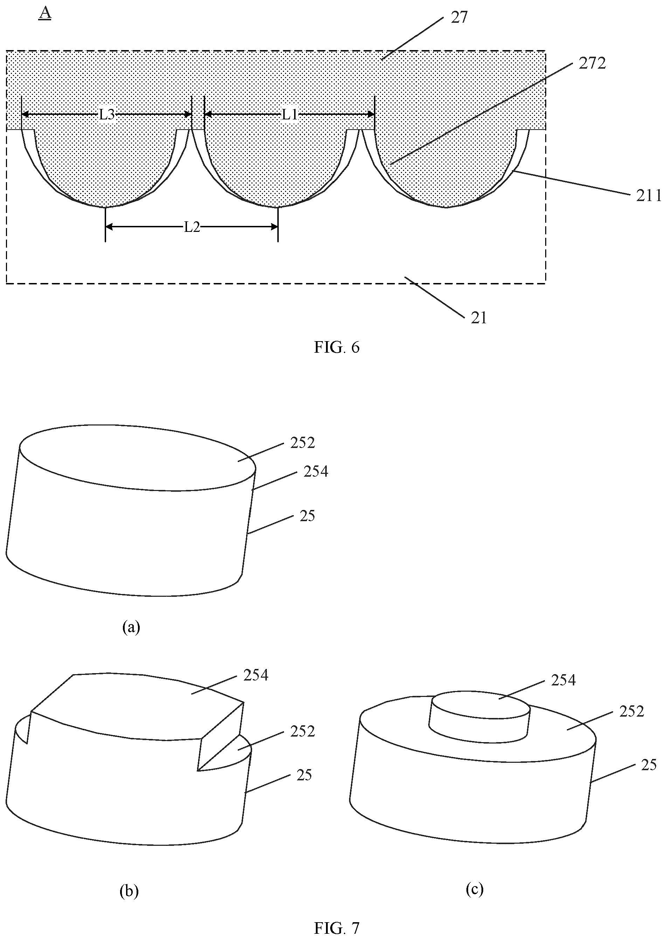

Specifically, FIG. 6 is an enlarged view of the region A in FIG. 5. As shown in FIG. 6, in a plane perpendicular to the radial direction of the liquid injection hole 24, an area of a cross section of a ring of the protruding structure 272 may be slightly smaller than an area of a cross section of a ring of the recessed structure 211. This design is aimed to reserve a space for squeezing the sealing gasket 27 when the protruding structure 272 is accommodated in the corresponding recessed structure 211, so that the protruding structure 272 can be in close contact with the recessed structure 211, so as to seal the liquid injection hole 24.

The surface of the sealing gasket 27 is provided with multiple rings of protruding structures 272, and the multiple rings of protruding structures 272 may be closely connected, or a certain gap may be disposed between every two adjacent rings of protrusions. The gap may be parallel to a side surface of the sealing gasket 27 facing the interior of the battery cell 20, or may be recessed relative to the surface in a direction away from the interior of the battery cell 20. Accordingly, a surface of the first wall 21 facing the sealing member 25 is provided with multiple rings of recessed structures 211, which are required to cooperate with the multiple rings of protruding structures 272 disposed on the surface of the sealing gasket 27, so that each ring of protruding structure 272 can be accommodated in a ring of recessed structure 211. In addition, the multiple rings of protruding structures 272 may also be disposed on the surface of the first wall 21 facing the sealing member 25, and correspondingly, the multiple rings of recessed structure 211 are disposed on the surface of the sealing gasket 27 facing the liquid injection hole 24. The embodiment of the present application is not limited thereto, as long as each ring of the protruding structure 272 can be accommodated in a ring of the recessed structure 211 in the structure.

A portion surrounding the liquid injection hole 24 is provided with the multiple rings of recessed structures 211 for accommodating the multiple rings of protruding structures 272, so that after the protruding structures 272 on the sealing gasket 27 are in close contact with the recessed structures 211 on the first wall 21, a contact area between the sealing gasket 27 and the first wall 21 can be increased, thereby making it difficult for the electrolytic solution to leak through the gap between the sealing gasket 27 and the first wall 21, and improving the sealing performance of the liquid injection hole 24 in the battery cell 20.

According to some embodiments of the present application, optionally, a spacing between every two adjacent rings of protruding structures 272 in the multiple rings of protruding structures 272 is equal to a preset value, and a spacing between every two adjacent rings of recessed structures 211 in the multiple rings of recessed structures 211 is equal to the preset value.

The spacing between two adjacent rings of protruding structures 272 may be a distance between the same side edges of the two adjacent rings of protruding structures 272, for example, L1 shown in FIG. 6; the spacing between the two adjacent rings of protruding structures 272 may also be a distance between centers of the two adjacent rings of protruding structures 272, for example, L2 shown in FIG. 6; and when a gap is disposed between two adjacent rings of protrusions, the spacing between the two adjacent rings of protruding structures 272 may also be a distance between centers of two adjacent gaps, for example, L3 shown in FIG. 6. Similarly, the spacing between two adjacent rings of recessed structures 211 can also be determined in the same manner.

The spacing between the multiple rings of protruding structures 272 is equal to the spacing between the multiple rings of recessed structures 211, which can ensure that each protruding structure 272 can be accommodated in one corresponding recessed structure 211, so that a close contact structure can be formed between the protruding structure 272 and the recessed structure 211, thereby making it difficult for the electrolytic solution to leak through the gap between the sealing gasket 27 and the first wall 21, so as to ensure the sealing performance of the liquid injection hole 24 in the battery cell 20.

According to some embodiments of the present application, optionally, the sealing member 25 is provided with a clamping part 254, and the clamping part 254 is configured for a clamping apparatus 30 to clamp and rotate the sealing member 25.

As shown in FIG. 7, FIG. 7 is a schematic structural diagram of a sealing member 25 provided by some embodiments of the present application, and the sealing member 25 shown in FIG. 7 is provided with a clamping part 254. The sealing member 25 shown in (a) of FIG. 7 is not additionally provided with a structure for facilitating clamping, and the clamping apparatus 30 may then be clamped on the side wall 251 of the sealing member 25, that is, the side wall 251 of the sealing member 25 is a clamping part of the sealing member 25.

The clamping part 254 is disposed on the sealing member 25, which can facilitate the clamping of the clamping apparatus 30, so as to facilitate the rotation of the sealing member 25 in a friction welding process, thereby improving production efficiency.

According to some embodiments of the present application, optionally, the clamping part 254 protrudes from a surface of the bottom wall 252 of the sealing member 25 away from the interior of the battery cell 20.

The clamping part 254 shown in FIG. 7 can protrude from the surface of the bottom wall 252 of the sealing member 25 away from the interior of the battery cell 20, and a space for clamping the clamping apparatus 30 is reserved. When the clamping apparatus 30 applies heading pressure to the sealing member 25 to press the sealing member 25 downwards, the space can accommodate the clamping apparatus 30 to prevent the clamping apparatus 30 from damaging the surface of the first wall 21.

The clamping part 254 protrudes from the surface of the sealing member 25, which facilitates clamping of the clamping apparatus 30, and at the same time, does not require the clamping apparatus 30 to contact the side wall 251 of the sealing member 25, thereby preventing the clamping apparatus 30 from damaging the side wall 251 of the sealing member 25 during the clamping and affecting the sealing performance of the sealing member 25 for the liquid injection hole 24.

According to some embodiments of the present application, optionally, the clamping part 254 has two clamping surfaces parallel to each other, the two clamping surfaces are perpendicular to the bottom wall 252 of the sealing member 25, and the clamping apparatus 30 clamps the two clamping surfaces.

(b) of FIG. 7 is a schematic diagram of the clamping part 254 having two clamping surfaces parallel to each other and perpendicular to the bottom wall 252 of the sealing member 25. During production, the clamping apparatus 30 can be clamped on the two clamping surfaces to move and rotate the sealing member 25.

The clamping part 254 is provided with two clamping surfaces parallel to each other and perpendicular to the bottom wall 252 of the sealing member 25, so that the clamping apparatus 30 can be clamped more securely, and the sealing member 25 does not easily rotate relative to the clamping apparatus 30 during rotation, thereby improving working efficiency.

According to some embodiments of the present application, optionally, the clamping part 254 is a cylinder, and the clamping apparatus 30 clamps a cylindrical surface of the cylinder.

(c) of FIG. 7 shows that the surface of the bottom wall 252 of the sealing member 25 away from the interior of the battery cell 20 is provided with a clamping part 254 in a cylinder shape, which is merely an example. The embodiment of the present application does not limit the specific shape of the clamping part 254. For example, the shape of the clamping part 254 may also be a cuboid.

The clamping part 254 is disposed in the shape of a cylinder, so that a large amount of operation space can be reserved for the clamping apparatus 30, which is beneficial to improving production efficiency.

According to some embodiments of the present application, optionally, the sealing member 25 is provided with a tool interface 255, and the tool interface (255) is configured to accommodate a rotating head of a rotating apparatus to rotate the sealing member 25.

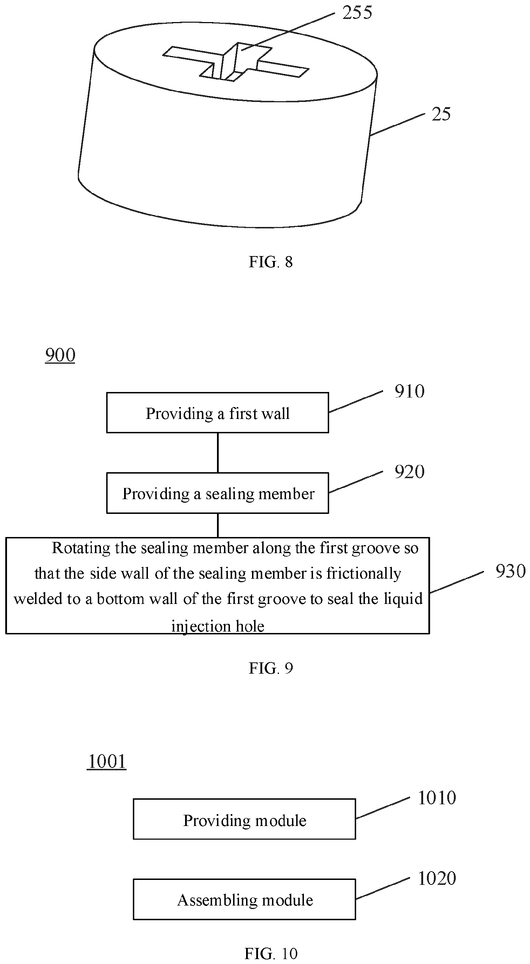

As shown in FIG. 8, FIG. 8 is a schematic structural diagram of another sealing member 25 according to some embodiments of the present application. The sealing member 25 shown in FIG. 8 is provided with a tool interface 255, and the tool interface 255 is recessed on the surface of the bottom wall 252 of the sealing member 25 away from the interior of the battery cell 20 to form a groove. The embodiment of the present application does not limit the shape of the tool interface 255. For example, the shape of the tool interface 255 may be a cross shape as shown in FIG. 8. Accordingly, the shape of the tool interface 255 on the sealing member 25 is adapted to the shape of the actual used rotating head. Still in the example of the tool interface 255 shown in FIG. 8, the tool interface 255 disposed on the sealing member 25 is in a cross shape, and therefore, the rotating head used in actual production should also be in a cross shape, so that the rotating head can be inserted into the tool interface 255 on the sealing member 25, thereby driving the sealing member 25 to rotate in the first groove 26 while applying heading pressure to the sealing member 25, so that friction welding is completed between the sealing member 25 and the first groove 26.

The tool interface 255 is disposed on the sealing member 25, which can provide an accommodation space for the rotating head, and at the same time, the sealing member 25 that is frictionally welded by using the tool interface 255 cannot protrude from the surface of the battery cell 20. Therefore, no protrusion is left on a surface of the battery cell 20, so that the surface of the battery cell 20 is relatively flat, the sealing member 25 is prevented from coming loose or falling off due to collision during transportation or use, and the sealing performance of the liquid injection hole 24 in the battery cell 20 is ensured.

According to some embodiments of the present application, the present application further provides a battery 100 including the battery cell 20 according to any one of the above solutions; and a box 10 configured to accommodate the battery cell 20.

According to some embodiments of the present application, the present application further provides a power consumption apparatus including the battery 100 according to any one of the above solutions, where the battery 100 is configured to provide electric energy.

The foregoing describes a battery cell 20, a battery 100, and a power consumption apparatus provided by embodiments of the present application. The following describes a method and apparatus for producing a battery cell 20 provided by embodiments of the present application with reference to FIG. 9 to FIG. 10. For a part that is not described in detail, reference may be made to the foregoing embodiments.

FIG. 9 is a schematic flowchart of a method 900 for producing a battery cell 20 provided by some embodiments of the present application. As shown in FIG. 9, the method 900 may include: 910: providing a first wall 21, where a liquid injection hole 24 is disposed on the first wall 21, and a first groove 26 in a circular ring shape is disposed around the liquid injection hole 24, and an opening of the first groove 26 faces an exterior of the battery cell 20; 920, providing a sealing member 25, where the sealing member 25 includes a bottom wall 252 and a side wall 251, the bottom wall 252 covers one end of the liquid injection hole 24 away from an interior of the battery cell 20, the side wall 251 is at least partially accommodated in the first groove 26, and the side wall 251 is in an annular structure; and 930, rotating the sealing member 25 along the first groove 26 so that the side wall 251 of the sealing member 25 is frictionally welded to a bottom wall of the first groove 26 to seal the liquid injection hole 24.

FIG. 10 is a schematic block diagram of an apparatus 1001 for producing a battery cell 20 provided by some embodiments of the present application. As shown in FIG. 10, the apparatus 1001 may include: a providing module 1010 configured to provide a first wall 21, where a liquid injection hole 24 is disposed on the first wall 21, a first groove 26 in a circular ring shape is disposed around the liquid injection hole 24, and an opening of the first groove 26 faces an exterior of the battery cell 20; the providing module 1010 further configured to provide a sealing member 25, where the sealing member 25 includes a bottom wall 252 and a side wall 251, the bottom wall 252 covers one end of the liquid injection hole 24 away from an interior of the battery cell 20, the side wall 251 is at least partially accommodated in the first groove 26, and the side wall 251 is in an annular structure; and an assembling module 1020 configured to rotate the sealing member 25 along the first groove 26 so that the side wall 251 of the sealing member 25 is frictionally welded to a bottom wall of the first groove 26 to seal the liquid injection hole 24.

While the present application has been described with reference to preferred embodiments, various improvements may be made and equivalents may be used to substitute parts therein without departing from the scope of the present application. In particular, as long as there is no structural conflict, technical features mentioned in various embodiments can be combined in any manner. The present application is not limited to the specific embodiments disclosed herein, but includes all technical solutions falling within the scope of the claims.

## Claims

1. A battery cell (20), comprising:
a first wall (21), wherein a liquid injection hole (24) is disposed on the first wall (21), a first groove (26) in a circular ring shape is disposed around the liquid injection hole (24), and an opening of the first groove (26) faces an exterior of the battery cell (20); and
a sealing member (25), wherein the sealing member (25) comprises a bottom wall (252) and a side wall (251), the bottom wall (252) covers one end of the liquid injection hole (24) away from an interior of the battery cell (20), the side wall (251) is at least partially accommodated in the first groove (26), the side wall (251) is in an annular structure, and the side wall (251) of the sealing member (25) is frictionally welded to a bottom wall of the first groove (26) to seal the liquid injection hole (24).

2. The battery cell (20) according to claim 1, wherein the sealing member (25) is provided with a clamping part (254), and the clamping part (254) is configured for a clamping apparatus (30) to clamp and rotate the sealing member (25).

3. The battery cell (20) according to claim 2, wherein the clamping part (254) protrudes from a surface of the bottom wall (252) of the sealing member (25) away from the interior of the battery cell (20).

4. The battery cell (20) according to claim 2 or 3, wherein the clamping part (254) has two clamping surfaces parallel to each other, the two clamping surfaces are perpendicular to the bottom wall (252) of the sealing member (25), and the clamping apparatus (30) clamps the two clamping surfaces.

5. The battery cell (20) according to claim 2 or 3, wherein the clamping part (254) is a cylinder, and the clamping apparatus (30) clamps a cylindrical surface of the cylinder.

6. The battery cell (20) according to claim 1, wherein the sealing member (25) is provided with a tool interface (255), and the tool interface (255) is configured to accommodate a rotating head of a rotating apparatus to rotate the sealing member (25).

7. The battery cell (20) according to any one of claims 1 to 6, wherein one end of the side wall (251) of the sealing member (25) facing an opening of the sealing member (25) is provided with a protruding part (253), the protruding part (253) protrudes from the side wall (251) of the sealing member (25) in a radial direction of the liquid injection hole (24), and the protruding part (253) is accommodated in the first groove (26).

8. The battery cell (20) according to claim 7, wherein the protruding part (253) is welded to a side wall of the first groove (26).

9. The battery cell (20) according to any one of claims 1 to 8, wherein the bottom wall and a side wall of the first groove (26) are connected by a rounded corner.

10. The battery cell (20) according to any one of claims 1 to 9, wherein a maximum depth of the first groove (26) is greater than or equal to a length of the sealing member (25) in a thickness direction of the first wall (21), so that a surface of the sealing member (25) away from the interior of the battery cell (20) does not protrude from a surface of the first wall (21) away from the interior of the battery cell (20).

11. The battery cell (20) according to any one of claims 1 to 10, wherein the battery cell (20) further comprises a sealing gasket (27), and the sealing gasket (27) is disposed between the bottom wall (252) and the first wall (21) to seal the liquid injection hole (24).

12. The battery cell (20) according to claim 11, wherein a surface of the first wall (21) facing the sealing gasket (27) is provided with multiple rings of recessed structures (211) surrounding the liquid injection hole (24), a surface of the sealing gasket (27) facing the liquid injection hole (24) is provided with multiple rings of protruding structures (272), the multiple rings of recessed structures (211) and the multiple rings of protruding structures (272) are correspondingly disposed, and each ring of protruding structure (272) in the multiple rings of protruding structures (272) is accommodated in a corresponding recessed structure (211).

13. The battery cell (20) according to claim 12, wherein a spacing between every two adjacent rings of protruding structures (272) in the multiple rings of protruding structures (272) is equal to a preset value, and a spacing between every two adjacent rings of recessed structures (211) in the multiple rings of recessed structures (211) is equal to the preset value.

14. The battery cell (20) according to any one of claims 11 to 13, wherein the sealing gasket (27) is bonded to the bottom wall (252) of the sealing member (25) through an adhesive layer (271).

15. The battery cell (20) according to any one of claims 11 to 14, wherein a heat insulating layer is disposed between the sealing member (25) and the sealing gasket (27).

16. The battery cell (20) according to any one of claims 1 to 15, wherein a distance between the first groove (26) and the liquid injection hole (24) is 0.5 to 10 mm, a depth of the first groove (26) is 0.2 to 2 mm, and a width of the first groove (26) is 0.5 to 5 mm.

17. A battery, comprising:
the battery cell (20) according to any one of claims 1 to 16; and
a box configured to accommodate the battery cell (20).

18. A power consumption apparatus, comprising: the battery according to claim 16, wherein the battery is configured to provide electric energy.

19. A method for producing a battery cell (20), comprising:
providing a first wall (21), wherein a liquid injection hole (24) is disposed on the first wall (21), a first groove (26) in a circular ring shape is disposed around the liquid injection hole (24), and an opening of the first groove (26) faces an exterior of the battery cell (20);
providing a sealing member (25), wherein the sealing member (25) comprises a bottom wall (252) and a side wall (251), the bottom wall (252) covers one end of the liquid injection hole (24) away from an interior of the battery cell (20), the side wall (251) is at least partially accommodated in the first groove (26), and the side wall (251) is in an annular structure; and
rotating the sealing member (25) along the first groove (26) so that the side wall (251) of the sealing member (25) is frictionally welded to a bottom wall of the first groove (26) to seal the liquid injection hole (24).

20. An apparatus for producing a battery cell (20), comprising:
a providing module (1010) configured to provide a first wall (21), wherein a liquid injection hole (24) is disposed on the first wall (21), a first groove (26) in a circular ring shape is disposed around the liquid injection hole (24), and an opening of the first groove (26) faces an exterior of the battery cell (20);
the providing module (1010) further configured to provide a sealing member (25), wherein the sealing member (25) comprises a bottom wall (252) and a side wall (251), the bottom wall (252) covers one end of the liquid injection hole (24) away from an interior of the battery cell (20), the side wall (251) is at least partially accommodated in the first groove (26), and the side wall (251) is in an annular structure; and
an assembling module (1020) configured to rotate the sealing member (25) along the first groove (26) so that the side wall (251) of the sealing member (25) is frictionally welded to a bottom wall of the first groove (26) to seal the liquid injection hole (24).
